# EUROPEAN PATENT SPECIFICATION

(11) **EP 0 644 295 B1**
(45) Date of publication and mention of the grant of the patent: **02.04.1997**
(21) Application number: 94113893.5
(22) Date of filing: 05.09.1994
(51) Int. Cl.: E01B 31/06, B23B 41/00

(54) **Drill for drilling rails and track rigs for railroad applications**
Bohrmaschine für Schienen eines Eisenbahngleises
Outil de perçage des rails de chemin de fer

(30) Priority: 21.09.1993 IT MI932026
(43) Date of publication of application: 22.03.1995
(73) Proprietor: CEMBRE S.p.A., I-25135 Brescia (IT)
(72) Inventor: Peroni, Ennio, I-25020 Flero (Province of Brescia) (IT)
(74) Representative: Modiano, Guido, Dr.-Ing.

(56) References cited:
- FR-A- 598 813
- FR-A- 2 668 405
- US-A- 1 408 872
- US-A- 1 421 194
- US-A- 1 671 575
- US-A- 1 695 062
- US-A- 4 753 556

## Description

The present invention relates to a drill for drilling rails and track rigs for railroad applications.

It is known that drilling devices adapted specifically for use on track rails are currently commercially available.

Such devices, which have particular constructive characteristics, have rather considerable dimensions and weights which often cause great difficulties in use.

Such devices generally have an electric motor or an internal-combustion engine which is mounted coaxially with the drill or milling cutter and which advances rigidly with the drill.

This type of structure, with the motor mounted so that it is axially aligned with the drilling tool and lies along its extension, entails a considerable longitudinal dimension which often is not compatible with the space available in some points of the track, such as rail switches and the like.

To the aforesaid it should be added the fact that in versions with an internal-combustion engine the exhaust of the combustion gases of the engine is often directed towards the operator, who consequently finds himself working in a toxic environment.

Such devices, as previously mentioned, are generally very heavy, and therefore movement is difficult; furthermore, in most cases they cannot be used by a single operator.

Conventional devices are generally predisposed only to execute holes horizontally, i.e. a hole whose axis is perpendicular to the stem of the rail, whereas in railroad applications it is often necessary to execute holes vertically, for example in the slabs supporting the boxes for the electrical actuation of rail switches; in this case it is necessary to use different devices, as it is not possible to modify the conventional drill adapted only to make horizontal holes.

A drill having the features set forth in the preamble of claim 1 is known from the prior document US-A-1 671 575.

A principal aim of the present invention is to eliminate the above mentioned drawbacks by providing a drill for drilling rails and track rigs for railroad applications which is structured so as to allow to work both horizontally and vertically and in all the positions occurring in the field of railroads.

Within the scope of the above mentioned aim, a particular object of the invention is to provide a drill which is very compact and handy and can consequently be used even in narrow spaces, such as are typically available at rail switches.

Another object of the present invention is to provide a drill which has a considerably reduced weight with respect to conventional devices, so that it can be used in all the circumstances which occur in railroad systems and can be easily carried even by a single operator.

Another object of the present invention is to provide a drill which is particularly versatile and practical in use and furthermore gives the greatest assurances of reliability and safety.

A further object of the present invention is to provide a drill for drilling rails and track rigs, in railroad applications, which can be easily obtained starting from commonly commercially available elements and materials and is advantageous from a purely economical point of view.

With this aim, the objects mentioned and others which will become apparent hereinafter in view, there is provided a drill for drilling rails and track rigs, in railroad applications, according to the invention and having the features of claim 1.

Further inventive features are set forth in the dependent claims.

The characteristics and advantages of the drill for drilling rails and track rigs in railroad applications according to the present invention will become apparent from the following detailed description of preferred but not exclusive embodiment thereof, illustrated only by way of non-limitative example in the accompanying drawings, wherein:

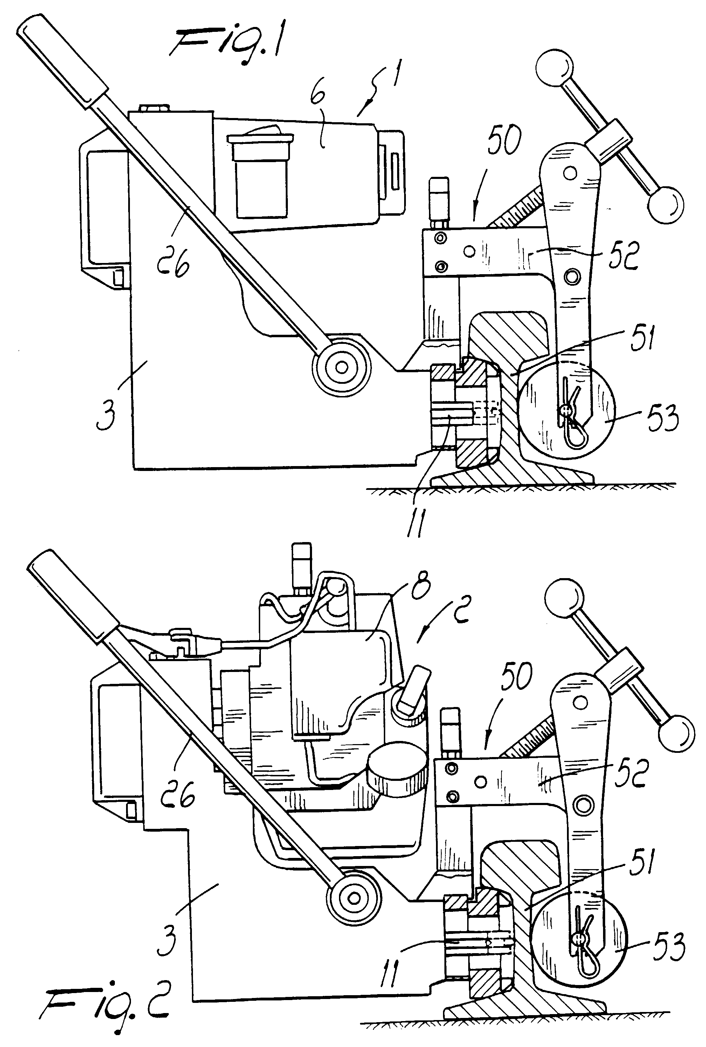

figure 1 is a schematic elevation view of a drill according to the invention, driven by an electric motor;

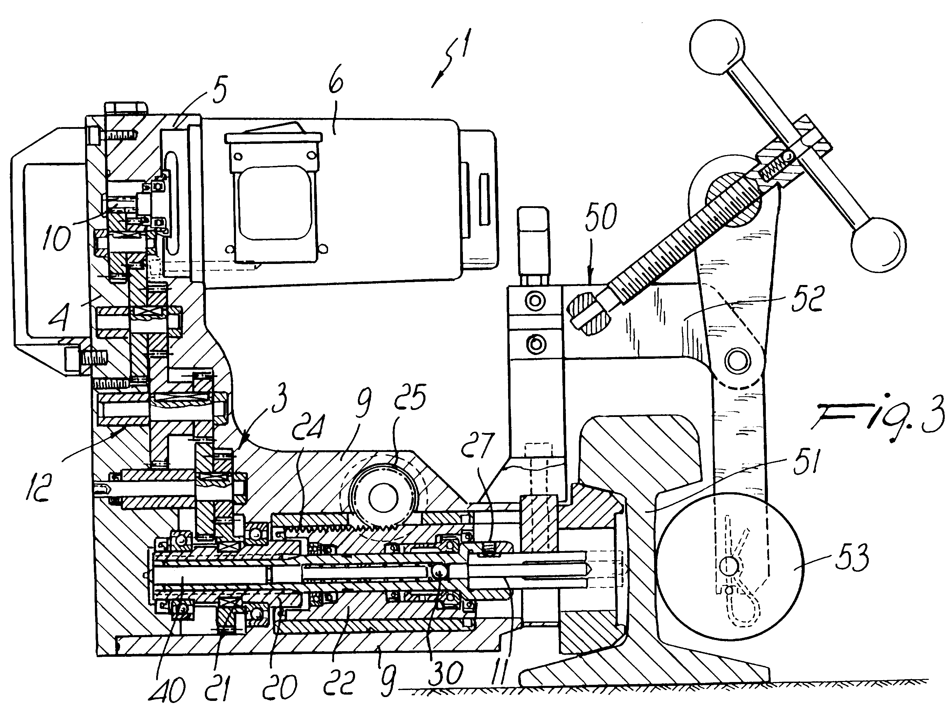

figure 2 is an elevation view of a drill according to the invention driven by an internal-combustion engine;
figure 3 is a sectional view of the drill with the electric motor applied to the web of the rail;
figure 4 is a sectional view of the drill with the internal-combustion engine applied to the web of the rail;

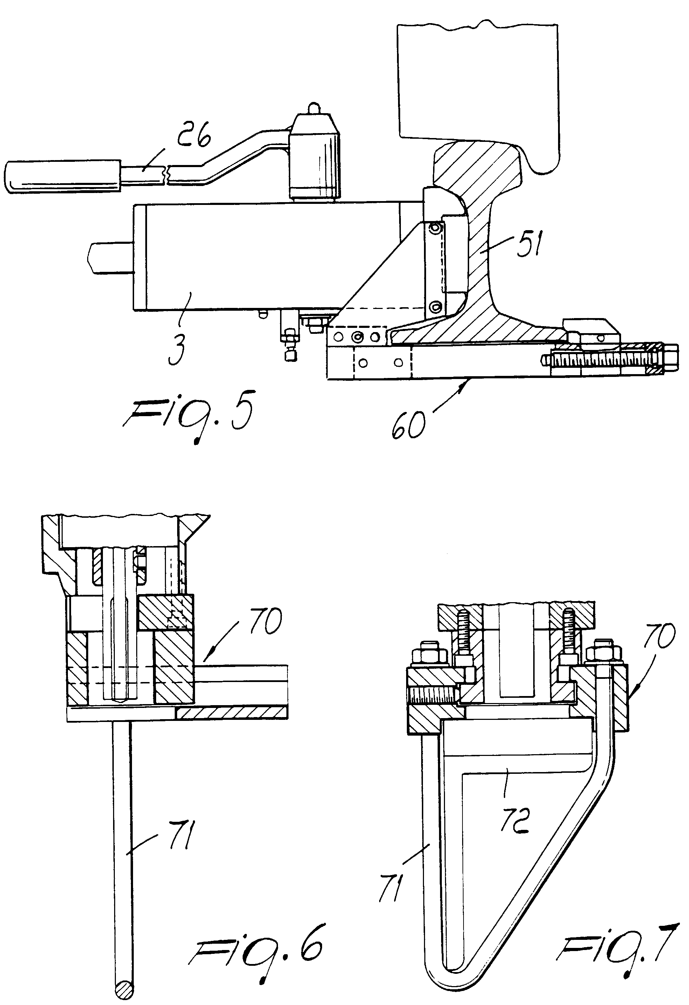

figure 5 is a schematic view of the drill applied to the flange of the rail and positioned outside its profile;
figures 6 and 7 are sectional views, taken along two perpendicular planes, of a jig for the positioning and fixing of the drill to drill the slabs that support the boxes for the electric actuation of rail switches;
figure 8 is a sectional view of the detail of the connection of the actuation lever of the means for the translatory motion of the tool shown in released position;
figure 9 illustrates the connection of the actuation lever of the means for translatory motion in locked position;
figure 10 is a sectional view, taken along the plane X-X of figure 9.

With reference to the above figures, the drill for drilling rails and track rigs, in railroad applications, according to the invention, which is generally designated by the reference numeral 1 for the electric-motor version and by the reference numeral 2 for the internal-combustion engine version, comprises a body 3 which is substantially L-shaped and is advantageously made of aluminum alloys.

The body 3 has a first wing 4 which delimits, at its free end, a flange 5 for the coupling of an electric motor 6 or a different flange 7 for the coupling of an internal-combustion engine designated by the reference numeral 8.

The motor 6 and the engine 8 are located above the second wing 9 of the body 3, so that the drill assembly assumes a substantially U-shaped configuration in which the output shaft, designated by 10 both for the electric motor and for the internal-combustion engine, is arranged parallel to, and spaced from, the tool's working axis.

The actuation motor or engine is connected to the tool, generally designated by the reference numeral 11, by means of the interposition of a reduction unit 12 which is advantageously constituted by a train of gears which are directly supported by the body 3.

The version driven by an internal-combustion engine is characterized in that the shaft of said engine is connected to the reduction unit by means of an elastic coupling 15; the casing of the engine furthermore does not rest directly on the body of the drill but is coupled to it advantageously by interposing four vibration-damping bushes 16. These constructive solutions avoid the transmission of unwanted mechanical stresses from the engine to the body of the tool, such as for example the vibrations produced by the engine itself during operation.

An important particularity of the invention resides in the fact that there are means for the translatory motion of the tool with respect to the body, so that during the advancement of the tool, both the body and the motor or engine remain in a fixed position and therefore only very small masses move. Said translatory motion means comprise a sleeve 20 which is internally grooved and is connected to the last gear of the reduction unit chain so that it is rotated by actuating the motor 6 or engine 8.

Inside the grooved sleeve 20 there is a grooved hollow shaft 21 which is rotationally coupled thereto and can slide with respect to it. The shaft 21 is rotatably supported by a slider 22 which has, on its surface, a rack portion 24 meshing with a gear 25 connected to a feed lever 26.

The actuation of the lever 26 causes the translatory motion of the slider 22 and of the grooved shaft which is supported by it and rotated by the grooved sleeve 20.

The grooved shaft 21 is provided, at its working end, with a spindle 27 for clamping the tool, which can be constituted by a milling cutter or by a helical drill provided with a cooling channel which is connected in a per se known manner to a refrigeration system controlled by a ball 30.

Another important aspect is the fact that inside the grooved shaft 21 there is a fixed abutment rod 40 which is connected to the body at its inner end and has its free end arranged proximate to the ball 30. The abutment rod 40 allows to eject the drilling scrap; when the drilling tool is constituted by a milling cutter, ejection is performed automatically during the backoff step, since as the tool backs off the carrot is expelled automatically.

At the free end of the second wing 9 of the body 3 it is possible to fix various jigs for fixing the body 3 at the element to be drilled.

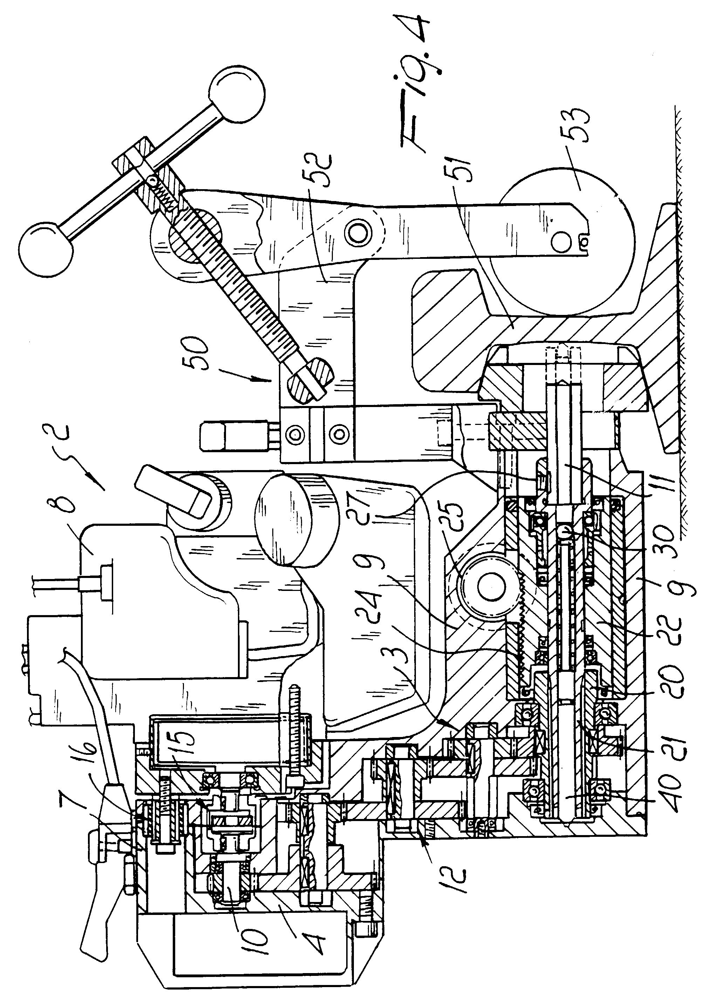

With reference for example to figure 3, there is a jig, designated by the reference numeral 50, which engages the web 51 of the rail; a bridge-like lever system 52 which passes above the rail then fixes an abutment 53 on the other edge of the web.

When it is necessary to mount the drill outside the profile, there is a system, designated by the reference numeral 60, for locking to the flange of the rail; by engaging below said foot, said system allows to arrange the drill so that the body 3 lies on a horizontal plane, so that it is possible to keep the drill connected to the rails even when trains pass.

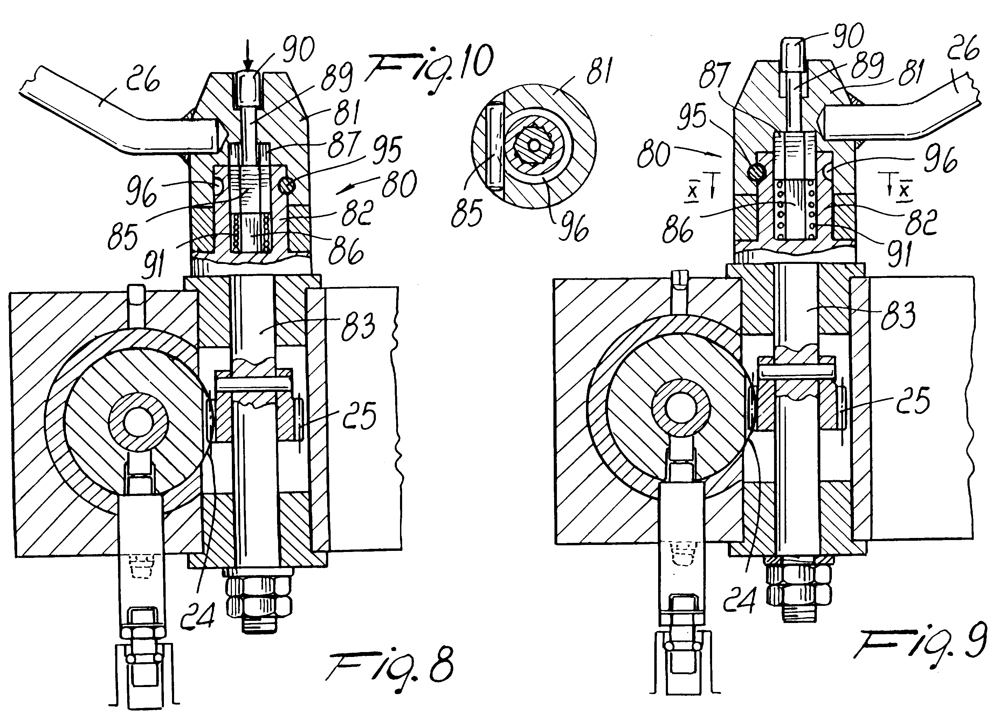

To perform vertical drillings, figures 6 and 7 illustrate a jig 70 equipped with a triangular bracket 71 for fixing to the profiles 72 which are located at the slabs that support the boxes for the electric actuation of rail switches.

Another characteristic of the invention is the fact that the actuation lever 26 of the translatory motion means is equipped with initial stroke positioning means which are more clearly illustrated in figures 8 to 10.

Said means, generally designated by the reference numeral 80, comprise a cap 81 fixed to the end of the actuation lever 26 and rotatably coupled around a tang 82 which is axially aligned with, and rigidly coupled to, the shaft 83 of the gear 25.

The cap 81 and the tang 82 are mutually coupled by means of a polygonal bar portion 85 which is accommodated in a polygonal seat 86 formed by the tang and can engage in a polygonal cavity 87 formed by the cap in order to rigidly rotationally couple them.

A stem 89 is connected to the polygonal bar 85 and ends with a button 90 protruding from the cap; a pusher spring 91 furthermore acts on the polygonal bar 85 and tends to move it into engagement with the cavity 87.

To perform angular positioning it is enough to apply pressure on the button 90, disengaging the polygonal bar from the polygonal cavity 87 and thus performing the required positioning of the lever 26, which is set by releasing the button 90, consequently causing the polygonal bar 85 to engage the polygonal cavity 87; this engagement rigidly rotationally couples the cap 81 to the tang 82.

For the sake of completeness, it should also be noted that a pin 95 is supported by the cap 81 and engages an annular groove 96 formed by the tang to prevent the axial disengagement of the cap with respect to the tang.

Therefore, during practical operation a drill is provided which is particularly compact in size by virtue of the fact that the motor or engine is arranged so that one of its axes is parallel to, and spaced from, the axis of the tool, so that the entire drill has overall dimensions that are considerably smaller than those of the known art.

Furthermore, since the moving masses are considerably limited, it is possible to use an aluminum alloy structure for the body which consequently has a very reduced weight.

The versatility of the drill is furthermore completed by the fact that the adopted configuration allows to apply to the body a plurality of jigs for coupling to the element to be drilled, so that said drill can be used for both horizontal and vertical drillings.

Furthermore, the presence of the means for the initial positioning of the lever allows to set the actuation lever always in the optimum position for the operator.

The invention thus conceived is susceptible to numerous modifications and variations within the scope of the appended claims.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Drill (1;2) for drilling rails and track rigs, in railroad applications, comprising: a body (3) which supports a motor (6;8) that drives a drilling tool (11) through a reduction unit (12), the output shaft (10) of said motor being substantially parallel to and spaced from the axis of said tool (11); means (20-26) for the translatory motion of said drilling tool with respect to said body; and means (50;60;70) for removably fixing said body with respect to an element (51;72) to be drilled, **characterized in that** said body (3) is substantially L-shaped, with a first wing (4) that forms a flange (5;7) for coupling to said motor, and a second wing (9) for accommodating said tool, the second wing (9) being substantially perpendicular to said first wing, and said motor being coupled at said flange (5; 7) in a position located above said second wing (9) with said output shaft (10) being superimposed on the axis of said tool (11) so that the drill assembly assumes a substantially U-shaped configuration.

2. Claim according to claim 1, characterized in that said body (3) is made of aluminium alloys.

3. Drill according to one or more of the preceding claims, characterized in that in a version driven by an internal-combustion engine (8) said output shaft (10) is connected to said reduction unit (12) by means of an elastic coupling (15) and said engine is connected to said body by means of the interposition of vibration-damping bushes (16).

4. Drill according to one or more of the preceding claims, characterized in that said means for removably fixing said body with respect to the element to be drilled are constituted by interchangeable jigs (50;60;70) which can be removably coupled to the free end of said second wing of said body.

5. Drill according to claim 4, characterized in that said jigs comprise a jig (50) for engaging a rail web (51), a jig (60) for locking to a rail flange and a jig (70) for fixing to profiles (72) located at slabs supporting boxes for electric actuation of rail switches.

6. Drill according to one or more of the preceding claims, characterized in that said translatory motion means comprise a sleeve (20) which is internally grooved, kinematically connected to said reduction unit (12), and slidingly coupleable to a hollow grooved shaft (21) which forms the supporting spindle for said tool (11).

7. Drill according to claim 6, characterized in that it comprises a slider (22) which is slidingly coupled to said body and rotatably supports said grooved shaft (21), said slider having, on its surface, a rack-like segment (24) with which a gear meshes (25), said gear being connected to an actuation lever (26).

8. Drill according to one or more of the preceding claims, characterized in that it comprises a fixed abutment rod (40) which is supported by said body and extends inside said grooved shaft, the free end of said fixed abutment rod acting as a device for expelling the drilling scrap following the return of said slider to its initial position.

9. Drill according to claim 8, characterized in that said rod (40) has said free end thereof in proximity of a ball (30) which controls a refrigeration system connected to a cooling channel of the drilling tool (11).

10. Drill according to claim 7, characterized in that it comprises means (80) for the initial positioning of said actuation lever.

11. Drill according to claim 10, characterized in that said initial positioning means comprise a cap (81) which is fixed to the end of said actuation lever (26) and is rotatably coupleable around a tang (82) which is axially aligned with, and rigidly coupled to, the driving shaft (83) of said gear (25) which meshes with said slider (22), a polygonal bar segment (85) being furthermore provided which is accommodated in a polygonal seat (86) formed by said tang and is removably engageable in a polygonal cavity (87) formed by said cap in order to rigidly rotationally couple said cap to said tang, a stem (89) being connected to said bar, said stem ending with a button (90) that protrudes from said cap, said polygonal bar segment being removably disengageable from said polygonal cavity for the initial positioning of said actuation lever.

## Patentansprüche

1. Bohrgerät zum Bohren von Schienen und Gleisteilen zur Anwendung bei Schienenstrecken mit einem Gestellkörper (3), der einen Motor (6, 8) trägt, der ein Bohrwerkzeug (11) über eine Reduziereinheit (12) antreibt, wobei die Abtriebswelle (10) des Motors (6, 8) im wesentlichen parallel und im Abstand von der Achse des Werkzeugs (11) angeordnet ist; Vorrichtungen (20-26) für die translatorische Bewegung des Bohrwerkzeugs in Bezug auf den Gestellkörper (3) und Hilfsmittel (50, 60, 70) zum lösbaren Befestigen des Gestellkörpers (3) in Bezug auf das zu bohrende Element (51, 72),
dadurch gekennzeichnet,
daß der Gestellkörper (3) im wesentlichen L-förmig ist und einen ersten Flügel (4) hat, der einen Flansch (5, 7) zur Verbindung mit dem Motor (6, 8) bildet sowie einen zweiten Flügel (9) zur Aufnahme des Werkzeugs (11) hat, wobei der zweite Flügel (9) im wesentlichen senkrecht zum ersten Flügel (4) und der Motor (6, 8) am Flansch (5, 7) mit der Abtriebswelle (10) oberhalb des zweiten Flügels (9) und über der Achse des Werkzeugs (11) liegend so angeordnet ist, daß die Bohranordnung eine im wesentlichen U-förmige Gestalt hat.

2. Bohrgerät nach Anspruch 1,
dadurch gekennzeichnet,
daß der Gestellkörper (3) aus Aluminium Legierungen hergestellt ist.

3. Bohrgerät nach Anspruche 1 und/oder 2,
dadurch gekennzeichnet,
daß bei Ausführung mit einem Brennkraftmotor (8) die Abtriebswelle (10) mit der Reduziereinheit (12) mittels einer elastischen Kupplung (15) verbunden ist und der Brennkraftmotor (8) mit dem Gestellkörper (3) mittels von dazwischen positionierten, vibrationsdämpfenden Buchsen (16) verbunden ist.

4. Bohrgerät nach einem oder mehreren der vorangehenden Ansprüche,
dadurch gekennzeichnet,
daß die Hilfsmittel zum lösbaren Befestigen des Gestellkörpers (3) in Bezug auf das zu bohrende Element aus austauschbaren Spannvorrichtungen (50, 60, 70)bestehen, die lösbar mit dem freien Ende des zweiten Flügels (9) des Gestellkörpers (3) verbunden sein können.

5. Bohrgerät nach Anspruch 4,
dadurch gekennzeichnet,
daß die Spannvorrichtungen eine solche Spannvorrichtung (50) zum Eingriff mit einer Schiene (51), eine Spannvorrichtung (60) zum Verriegeln an einem Schienen-Flansch und eine Spannvorrichtung (70) zum Befestigen an Profilen (72) aufweisen, die an Platten positioniert sind, die Gehäuse zum elektrischen Antrieb von Schienenweichen tragen.

6. Bohrgerät nach einem oder mehreren der vorangehenden Ansprüche,
dadurch gekennzeichnet,
daß die Vorrichtungen für die translatorische Bewegung eine Buchse (20) aufweisen, die mit einer inneren Nut ausgestattet und beweglich mit der Reduziereinheit (12) verbunden ist sowie verschieblich mit einer hohlen, genuteten Welle (21) gekuppelt ist, welche die das Werkzeug (11) tragende Spindel bildet.

7. Bohrgerät nach Anspruch 6,
dadurch gekennzeichnet,
daß es einen am Gestellkörper (3) verschieblichen Gleitschieber (22) aufweist, in dem die genutete Welle (21) gelagert ist und der an seiner Außenseite ein zahnstangenartige Segment (24) hat, mit dem ein Getrieberad (25) kämmt, welches mit einem Betätigungsshebel (26) verbunden ist.

8. Bohrgerät nach einem oder mehreren der vorangehenden Ansprüche,
dadurch gekennzeichnet,
daß es einen feststehenden Stab (40) aufweist, der vom Gestellkörper (3) getragen ist und sich innerhalb der genuteten Welle (21) erstreckt, wobei das freie Ende dieses feststehenden Stabes (40) als Vorrichtung zum Ausstoß des Bohrabfalls bei der Rückwärtsbewegung des Gleitschiebers in seine Ausgangsposition dient.

9. Bohrgerät nach Anspruch 8,
dadurch gekennzeichnet,
daß benachbart dem freien Ende des feststehenden Stabes (40) eine Kugel (30) angeordnet ist, die ein Kühlsystem steuert, das mit einem Kühlkanal des Bohrwerkzeugs (11) verbunden ist.

10. Bohrgerät nach Anspruch 7,
dadurch gekennzeichnet,
daß es eine Hilfsvorrichtung (80) zum Positionieren des Betätigungshebels (26) in der Ausgangslage aufweist.

11. Bohrgerät nach Anspruch 10,
dadurch gekennzeichnet,
daß die Positioniervorrichtung (80) eine Kappe (81) auf weist, die am Ende des Betätigungshebels (26) angebracht und drehbar auf einem Zapfen (82) gelagert ist, der mit der Welle (83) des mit dem Gleitschieber (22) in Eingriff stehenden Getrieberades (25) koaxial und mit dieser Welle (83) starr verbunden ist, und daß ein vieleckiges Stangensegment (85) vorgesehen ist, welches auf einem vieleckigen, durch den Zapfen (82) gebildeten Sitz (86) angeordnet und in Eingriff mit einer polygonen Aushöhlung (87) in der Kappe (81) bringbar ist, um die Kappe (83) mit dem Zapfen (82) drehfest zu verbinden, und daß ferner mit der Welle (83) ein Schaft (89) mit einem Knopf (90) am Ende der über die Kappe (83) vorsteht, verbunden ist, wobei das vieleckige Stangensegment (85) außer Eingriff von der polygonen Aushöhlung (87) zwecks Positionieren des Betätigungshebels (26) in die Ausgangslage bringbar ist.

## Revendications

1. Perceuse (1 ; 2) destinée à percer des rails et des équipements de voies, dans des applications ferroviaires, comprenant : un corps (3) supportant un moteur (6 ; 8) qui entraîne un outil de perçage (11) par l'intermédiaire d'une unité de réduction (12), l'arbre de sortie (10) du moteur étant sensiblement parallèle à, et espacé de l'axe de l'outil (11) ; des moyens (20-26) pour le mouvement en translation de l'outil de perçage par rapport au corps ; et des moyens (50 ; 60 ; 70) permettant de fixer, de façon amovible, le corps par rapport à un élément (51 ; 72) à percer, caractérisée en ce que le corps (3) a sensiblement une forme de L, avec une première branche (4) qui constitue une bride (5 ; 7) pour le couplage avec le moteur, et une deuxième branche (9) pour loger l'outil, la deuxième branche (9) étant sensiblement perpendiculaire à la première branche, et le moteur étant couplé, au niveau de la bride (5 ; 7), au-dessus de la deuxième branche (9), l'arbre de sortie (10) étant superposé sur l'axe de l'outil (11) de telle sorte que l'ensemble de perçage présente sensiblement une forme de U.

2. Perceuse selon la revendication 1, caractérisée en ce que le corps (3) est constitué en différents alliages d'aluminium.

3. Perceuse selon l'une ou plusieurs des revendications précédentes, caractérisée en ce que, dans une version entraînée par un moteur à combustion interne (8), l'arbre de sortie (10) est relié à l'unité de réduction (12) au moyen d'un accouplement élastique (15) et le moteur est relié au corps avec interposition de douilles (16) amortissant les vibrations.

4. Perceuse selon l'une ou plusieurs des revendications précédentes, caractérisée en ce que les moyens permettant de fixer, de façon amovible, le corps par rapport à l'élément à percer sont constitués par des montures (50 ; 60 ; 70) interchangeables qui peuvent être accouplées, de façon amovible, à l'extrémité libre de la deuxième branche du corps.

5. Perceuse selon la revendication 4, caractérisée en ce que les montures comprennent une monture (50) destinée à recevoir une âme de rail (51), une monture (60) destinée à être verrouillée sur un patin de rail et une monture (70) destinée à être fixée sur des profilés (72) situés au niveau de boites de support de brames pour l'actionnement électrique d'aiguillages.

6. Perceuse selon l'une ou plusieurs des revendications précédentes, caractérisée en ce que les moyens permettant le mouvement en translation comprennent un manchon (20) intérieurement rainuré, relié de façon cinématique à l'unité de réduction (12), et pouvant être accouplé de façon coulissante à un arbre creux rainuré (21) qui constitue l'axe de support de l'outil (11).

7. Perceuse selon la revendication 6, caractérisée en ce qu'elle comprend un coulisseau (22) est qui est accouplé de façon coulissante avec le corps et supporte, de façon rotative, l'arbre rainuré (21), ce coulissant présentant, sur sa surface, un segment (24) semblable à une crémaillère avec lequel coopère un engrenage (25), cet engrenage étant relié à un levier d'actionnement (26).

8. Perceuse selon l'une ou plusieurs des revendications précédentes, caractérisée en ce qu'elle comprend une tige de butée fixe (40) qui est supportée par le corps et s'étend à l'intérieur de l'arbre rainuré, l'extrémité libre de la tige de butée fixe agissant comme un dispositif servant à expulser les déchets de perçage, suite au retour du coulisseau dans sa position initiale.

9. Perceuse selon la revendication 8, caractérisée en ce que l'extrémité libre de la tige (40) se trouve à proximité d'une bille (30) qui commande un système de refroidissement relié à un canal de refroidissement de l'outil de perçage (11).

10. Perceuse selon la revendication 7, caractérisée en ce qu'elle comprend des moyens (80) pour le positionnement initial du levier d'actionnement.

11. Perceuse selon la revendication 10, caractérisée en ce que les moyens de positionnement initial comprennent un capuchon (81) qui est fixé sur l'extrémité du levier d'actionnement (26) et est susceptible d'être accouplé de façon rotative autour d'un tenon (82) qui est axialement aligné avec, et est rigidement accouplé à l'arbre menant (83) de l'engrenage (25) qui coopère avec le coulisseau (22), un segment de barre polygonal (85) étant prévu, en outre, et logé dans un siège polygonal (86) formé par le tenon, et pouvant s'insérer de façon amovible dans une cavité polygonale (87) formée par ce capuchon afin d'accoupler en rotation, de façon rigide, 1e capuchon et le tenon, une tige (89) étant reliée à la barre, la tige se terminant par un bouton (90) dépassant du capuchon, le segment de barre polygonal pouvant être dégagé de la cavité polygonale pour mettre le levier d'actionnement dans sa position initiale.
